# EUROPÄISCHE PATENTSCHRIFT

(11) **EP 1 611 545 B1**
(45) Veröffentlichungstag und Bekanntmachung des Hinweises auf die Patenterteilung: **26.07.2006**
(21) Anmeldenummer: 04720527.3
(22) Anmeldetag: 13.03.2004
(51) Int. Cl.: G06K 19/06, G06K 7/10

(54) **VERFAHREN UND VORRICHTUNG ZUM LESEN VON TIEFEN-BARCODES MITTELS OPTISCHER INTERFERENZ**
METHOD AND DEVICE FOR READING DEEP BARCODES BY WAY OF OPTICAL INTERFERENCE
PROCEDE ET DISPOSITIF DE LECTURE DE CODE BARRES PROFOND PAR INTERFERENCE OPTIQUE

(30) Priorität: 01.04.2003 DE 10314633
(43) Veröffentlichungstag der Anmeldung: 04.01.2006
(73) Patentinhaber: Medizinisches Laserzentrum Lübeck GmbH, D-23562 Lübeck (DE)
(72) Erfinder: KOCH, Peter, 23558 Luebeck (DE); HUETTMANN, Gereon, 23564 Luebeck (DE); KOCH, Edmund, 01309 Dresden (DE); LANKENAU, Eva, 23554 Luebeck (DE)
(74) Vertreter: Biehl, Christian
(86) Internationale Anmeldenummer: PCT/DE2004/000508
(87) Internationale Veröffentlichungsnummer: WO 2004/088580

(56) Entgegenhaltungen:
- WO-A-02/084263
- DE-A- 4 309 056
- US-A- 4 794 238
- US-A- 5 129 974

## Beschreibung

Die Erfindung betrifft ein Verfahren zum Lesen eines sich in die Tiefe eines Trägers erstreckenden Barcodes mittels optischer Interferenz gemäß Anspruch 1, wobei der Barcode durch einen Bereich mit Markierungen in dem für elektromagnetische Strahlung teildurchlässigen Träger repräsentiert wird.

Ein gewöhnlicher, meist gedruckter, Barcode bestehend aus einer Mehrzahl parallel angeordneter Striche oder Balken ("Bars") zur maschinenlesbaren Artikelidentifikation ist allgemein bekannt. Unter einem Tiefen-Barcode soll nun ein solcher verstanden werden, bei dem die Bars nicht auf oder parallel zur Oberfläche des markierten Trägers angeordnet sind, sondern senkrecht zur Oberfläche untereinander in verschiedenen Tiefenebenen des Trägermaterials.

Zur beispielhaften Erläuterung wird ein Teilvolumen des Trägers (Substrats) mit charakteristischer Breite D (z.B. Kantenlänge, Durchmesser) und Höhe H (Höhe senkrecht zur Substratoberfläche) als Markierungsbereich betrachtet, der den Tiefen-Barcode aufweist. Der Bereich kann in N Schichten der jeweils gleichen Dicke dH unterteilt werden, so dass N · dH = H. Jede einzelne Schicht kann nun markiert sein oder nicht, wobei die Markierung wenigstens in einer Änderung der optischen Eigenschaften gegenüber dem unmarkierten Substrat besteht, welche die Rückstreuung bzw. Reflexion von Licht wenigstens in einem - vorzugsweise nicht-ionisierenden - Spektralbereich beeinflusst. Ermittelt man alle Positionen der markierten Schichten mit einer Auflösung besser als die Schichtdicke dH, so ergibt sich hieraus ein Barcode der Länge N Bit.

Vorteilhaft bei der Verwendung von Tiefen-Barcodes ist die Möglichkeit, eine größere Zahl von Tiefen-Barcodes auf Trägern mit begrenzter Oberfläche unterzubringen, da ein einzelner Barcode nur eine (Querschnitts-)Fläche der Größenordnung D² < 1000 µm² benötigt. Dies ermöglicht beispielsweise das Aufzeichnen zusätzlicher Probeninformationen oder einer ausführlichen Analyse-Historie auf einen Probenträger. Ordnet man eine Mehrzahl von Tiefen-Barcodes bevorzugt so nebeneinander an, dass geradlinige Bewegungen des Lesegeräts oder des Trägers das sequentielle Lesen der Barcodes ermöglichen, so lassen sich große Datenmengen in einfacher Weise auf wenig Raum speichern (1000 Tiefen-Barcodes pro Quadratmillimeter). Dabei bleiben die einzelnen Lesevorgänge voneinander unabhängig. Insbesondere können die Tiefen-Barcodes zu verschiedenen Zeiten und mit verschiedenen Schreibgeräten aufgezeichnet worden sein.

Ein weiterer Vorteil von Tiefen-Barcodes liegt in der erhöhten Manipulationssicherheit. Mit dem bloßen Auge erscheint ein Tiefen-Barcode im sichtbaren Bereich als indifferenter "trüber Fleck" . Er kann ohne ein Lesegerät im Gegensatz zum konventionellen Barcode überhaupt nicht erkannt und in einen Ziffernstring übersetzt werden. Man benötigt also mindestens geeignete Gerätschaften zum Lesen und Schreiben, um spezifische Manipulationen durchführen zu können, was oft schon an den damit verbundenen Kosten scheitern dürfte.

Verfahren zum Schreiben derartiger Tiefen-Barcodes können sehr unterschiedlich ausgelegt sein. Beispielsweise können Etiketten aus einer Vielzahl übereinander geklebter Filmschichten unterschiedlicher Transparenz oder Brechzahl angefertigt werden, wobei die Abfolge der Transparenzwechsel den Barcode enthält. Bei Halbleitern oder anderen Kristallsubstraten könnte der Barcode während des epitaküschen Wachstums durch kontrollierte Änderung des bereitgestellten Materials oder der Wachstumsbedingungen vorgegeben werden.

Eine besonders interessante Möglichkeit zur Anfertigung vollkommen fälschungssicherer - weil unreproduzierbarer - Tiefen-Barcodes besteht im Einrühren von Streupartikeln in eine aushärtende, optisch transparente Matrix, z.B. Gießharz. Die einmal fixierte, genau zu vermessende Verteilung der Streuer im Markierungsbereich stellt einen einmaligen Code dar, der sich nicht durch gleichartiges Vorgehen exakt kopieren lässt. Mögliche Anwendungen solcher einmaliger "Nummernschilder" liegen in der unverwechselbaren Kennzeichnung von Geräten, deren Bewegungs- und Verwendungsspielraum strengen Kontrollen unterworfen wird, wie etwa militärischen Fahrzeugen und Waffensystemen.

Für Glasträger bietet sich die so genannte Innengravur mit Laserlicht an. Dabei werden mit kurzzeitigen Laserlichtblitzen genau lokalisierte Volumina in wählbarer Tiefe unter der Glasoberfläche so beschädigt, dass das Substrat in diesen Volumina wesentlich an Transparenz verliert. Bereits heute lassen sich so mit dem Auge sichtbare Symbole in das Glas gravieren, ohne die Glasoberfläche in Mitleidenschaft zu ziehen. Anwendungen dieser Technik liegen in der Kennzeichnung und Archivierung biologischer und medizinischer Probenträger z.B. für das "High Throughput Screening" (HTS), die nicht durch Ablagerungen auf einer gravierten Oberfläche kontaminiert werden dürfen.

Unabhängig von den Einzelheiten des Schreibvorgangs stellt sich die Aufgabe, einen in einem Markierungsbereich auf einem Träger geschriebenen Tiefen-Barcode schnell und mit geringem apparativem Aufwand wieder auszulesen. Dies ist zugleich die Aufgabe der Erfindung.

Diese Aufgabe wird gelöst durch die Merkmale des Anspruchs 1. Die Unteransprüche betreffen vorteilhafte Weiterbildungen bzw, eine Vorrichtung zur Durchführung des Verfahrens.

Zur Durchführung des Verfahrens mit möglichst geringem apparativem Aufwand - und damit preiswert - bieten sich vor allem Interferometer an, die ohne bewegte Teile auskommen.

Eine erste geeignete Meßmethode besteht in einer Variante der "Optical Coherence Tomography" (OCT), die z.B. in der WO 02/084263 beschrieben wird. OCT-Systeme wurden speziell für tiefenaufgelöste Strukturuntersuchungen entwickelt und arbeiten üblicherweise nach dem Prinzip eines Michelson-Interferometers. Dabei wird Licht kurzer Kohärenzlänge in eine Probe eingestrahlt und aus verschiedenen Schichttiefen der Probe unterschiedlich stark zurückgestreut bzw. reflektiert. Sieht man z.B. die Probenoberfläche als den Spiegel des Referenzarms im Michelson-Interferometer an, so kann das rückgestreute bzw. reflektierte Licht in Proben- und Referenzlicht aufgeteilt und in einer Analyseeinheit zur Interferenz gebracht werden. Aus dem dabei entstehenden Interferenzmuster kann auf die Laufzeitverteilung des Probenlichts geschlossen werden, und somit auf das Streu- bzw. Reflexionsvermögen der verschiedenen Schichttiefen S(z) in der Probe.

Ein zweites geeignetes Verfahren ist dem Fachmann aus der DE 43 09 056 A1 auch unter der Bezeichnung "Spektralradar" bekannt. Dabei wird Licht aus einer breitbandigen Lichtquelle in der Probe in einer Ebene mit Abstand z zu einer Referenzebene (z=0) gestreut und mit rückgestreutem Licht aus der Referenzebene überlagert. Es kommt so zu konstruktiver oder destruktiver Interferenz für einen beliebigen, festen Abstand z der Ebenen je nachdem, welche der eingestrahlten Wellenlängen λ, man betrachtet. Sind eine Mehrzahl von Ebenen mit Abständen aus einem Intervall [z1, z2] zur Referenzebene an der Rückstreuung beteiligt, so ist die Ausgangsintensität I(λ) als Integral über dieses Intervall aufzufassen. Bei Verwendung breitbandigen Lichts, z.B. aus einer Superlumineszenzdiode, wird das Interferenzlicht spektral zerlegt und üblicherweise auf eine Photodiodenzeile oder eine vergleichbare Vorrichtung abgebildet. Dies erlaubt das Messen der Verteilung I(k), k=2π/λ als räumliche Verteilung auf der Sensorzeile. Eine Fouriertransformation dieser Verteilung führt in einem Rechenschritt auf das tiefenabhängige Streu- bzw. Reflexionsvermögen S(z).

Die genannten Interferometer verwenden eine definierte Ebene der Probe - i. a. die Probenoberfläche - als Strahlteiler und Spiegel für das Referenzlicht. Beim Lesen von Tiefen-barcodes ist dies besonders zu bevorzugen, schon weil ein zu diesem Zweck eigens gefertigter Träger, z.B. ein Etikett, ohne weiteres mit einer hierfür optimalen Beschichtung ausgestattet werden kann. In manchen Fällen kann es jedoch vorteilhaft sein, einen Referenzlichtspiegel außerhalb des Trägers zu verwenden, etwa in einem eigenen Referenzarm, in den das Referenzlicht über einen Strahlteiler gelenkt wird, oder durch das Einsetzen eines teilreflektierenden Fensters in die auf den Träger gerichtete Beleuchtungsoptik. Solche Ausgestaltungen sind zweckmäßig, wenn z.B. durch Verschmutzung Alterung oder mechanische Beanspruchung mit einer Schädigung der sonst als Referenzspiegel gedachten Ebene des Trägers zu rechnen ist.

Sobald das Streuvermögen bzw. die Reflektivität als Funktion der Schichttiefe S(z) in digitalisierter Form zur Verfügung steht, ist die Übersetzung dieser Funktion durch eine Transkriptionseinheit - Rechner mit gängiger Software - in einen Zahlenstring in nahe liegender Weise zu erreichen.

Heutige Interferometer-Tomographen sind in der Lage, einen Markierungsbereich von bis zu 2 mm bei einer Schichtauflösung von 10 µm zu scannen. Daraus ergibt sich eine theoretisch erzielbare Länge des Barcodes von 200 Bit, was deutlich mehr ist als etwa die erforderlichen 95 Bit des Universal Product Code (UPC). Auf die genaue Position des Barcodes im Markierungsbereich des Trägers kommt es nicht an, ebenso wenig auf die charakteristische Breite D des Markierungsbereichs, die sich an der Beleuchtungsoptik zu orientieren hat, und nur wenige 10 µm betragen muss. Die absoluten Abstände dH benachbarter Schichten - Bars - im Markierungsbereich sind ebenfalls unwesentlich, sofern sie die Auflösung des benutzten interferometrischen Verfahrens nicht unterschreiten und innerhalb geringer Toleranzen über den ganzen Barcode konstant bleiben. Es ist mit gängigen Verfahren kein Problem, die Transkriptionseinheit so zu programmieren, dass relative Verschiebungen und Verzerrungen von Tiefen-Barcodes zueinander automatisch erkannt und korrekt kompensiert werden.

Besonders vorteilhaft am erfindungsgemäßen Verfahren ist die Möglichkeit, sogar optisch unsichtbare Sicherheitsmarkierungen zu identifizieren. Wählt man nämlich ein im sichtbaren Spektrum undurchlässiges Trägermaterial, das wiederum z.B. im Infraroten teildurchlässig ist, so können Markierungen unter der Oberfläche immer noch gelesen werden, wenn man nur a priori weiß, ob und wo genau welche vorhanden sind.

## Patentansprüche

1. Verfahren zum Lesen eines sich in die Tiefe eines Trägers erstreckenden Barcodes mittels optischer Interferenz, wobei der Barcode durch einen Bereich mit Markierungen in dem für elektromagnetische Strahlung teildurchlässigen Träger repräsentiert wird, durch Beleuchten des Trägers mit Licht kurzer Kohärenzlänge aus einer breitbandigen Lichtquelle, Aufteilen des Lichts in Referenz- und Messlicht, Rückführen von Referenzlicht und von im Markierungsbereichs rückgestreutem bzw. reflektiertem Messlicht in eine Analyseeinheit, Ermitteln des Rückstreuvermögens bzw. der Reflektivität des Trägers für alle Schichttiefen im Markierungsbereich aus der Interferenz von Referenz- und Messlicht und Interpretieren des Ergebnisses als Barcode.

2. Verfahren nach Anspruch 1, **dadurch gekennzeichnet, dass** die Überlagerung von Referenz- und Messlicht in der Analyseeinheit ein räumliches Interferenzmuster erzeugt, dessen Lichtintensitätsverteilung mit einer in der Analyseeinheit angeordneten Detekdonseinheit gemessen wird, und dass eine Auswerteeinheit hieraus das tiefenabhängige Streuvermögen des Trägers ermittelt.

3. Verfahren nach Anspruch 1, **dadurch gekennzeichnet, dass** nach Überlagerung von Referenz- und Messlicht mit einem in der Analyseeinheit angeordneten Spektrometer eine räumlich spektral zerlegte Intensitätsverteilung erzeugt wird, die mit einer in der Analyseeinheit befindlichen Detektionseinheit gemessen wird, und dass eine Auswerteeinheit hieraus das tiefenabhängige Streuvermögen des Trägers ermittelt.

4. Verfahren nach einem der vorangehenden Ansprüche, **dadurch gekennzeichnet, dass** das Aufteilen des Lichts in Referenz- und Messlicht durch einen Strahlteiler erfolgt, der das Referenzlicht auf einen Spiegel lenkt.

5. Verfahren nach einem der Ansprüche 1 bis 3, **dadurch gekennzeichnet, dass** das Aufteilen des Lichts in Referenz- und Messlicht durch Teilreflexion des Beleuchtungslichts in einer vorab gewählten Ebene im Strahlengang des auf die Probe gerichteten Beleuchtungslichts erfolgt.

6. Verfahren nach Anspruch 5, **dadurch gekennzeichnet, dass** die vorab gewählte Ebene Bestandteil des Trägers, insbesondere seine Oberfläche, ist.

7. Verfahren nach einem der vorangehenden Ansprüche, **dadurch gekennzeichnet, dass** das Licht nicht sichtbares IR-Licht ist.

8. Verfahren nach Anspruch 7, **dadurch gekennzeichnet** das Frequenzspektrum des Be leuchtungslichts so eingerichtet ist, dass ein für sichtbares Licht undurchlässiger Träger für das Beleuchtungslicht wenigstens teildurchlässig ist.

9. Vorrichtung zur Durchführung des Verfahrens nach Anspruch 1, mit einer breitbandigen Lichtquelle mit kurzer kohärenzlänge, einer optischen Anordnung zur Beleuchtung des Trägers, Mitteln zur Aufteilung des Beleuchtungslichts in Referenz- und Messlicht, einer Analyseeinheit umfassend eine Detektionseinheit für Licht sowie Mitteln zur Rückführung von Mess- und Referenzlicht vom Träger in die Analyseeinheit, einer rechnergestützten Auswerteeinheit zur Verarbeitung der sich aus der Interferenz von Referenz- und Messlicht ergebenden Messdaten aus der Analyseeinheit und einer Transkriptionseinheit, die das Ergebnis der Auswerteeinheit als Barcode interpretiert welcher sich in die Tiefe des Trägers erstreckt und zur digitalen Weiterverarbeitung aufbereitet.

10. Vorrichtung nach Anspruch 9, **dadurch gekennzeichnet, dass** die Detektionseinheit aus nebeneinander angeordneten, lichtempfindlichen Elementen besteht, die der einfallenden Lichtintensität proportionale elektrische Signale erzeugen.

## Claims

1. Method for reading a bar code extending into the depth of a substrate by means of optical interference, the bar code being represented by an area with markings in the substrate which is semitransparent for electromagnetic radiation, by illuminating the substrate with short coherence length light from a broad-band light source, dividing up the light into reference and measuring light, returning the reference light and measuring light backscattered or reflected in the marking area into an analysis unit, determining the backscattering power or reflectivity of the substrate for all layer depths in the marking area from the interference of the reference and measuring light and interpreting the results as a bar code.

2. Method according to claim 1, **characterized in that** the superimposing of reference and measuring light in the analysis unit produces a spatial interference pattern, whose light intensity distribution is measured with a detection unit located in the analysis unit, and that an evaluating unit determines therefrom the depth-dependent scattering power of the substrate.

3. Method according to claim 1, **characterized in that** after superimposing the reference and measuring light with a spectrometer located in the analysis unit a spatially spectrally dispersed intensity distribution is produced and is measured with a detection unit located in the analysis unit, and that an evaluating unit determines therefrom the depth-dependent scattering power of the substrate.

4. Method according to one of the preceding claims, **characterized in that** the splitting of the light into reference and measuring light takes place through a beam splitter which deflects the reference light onto a mirror.

5. Method according to one of the claims 1 to 3, **characterized in that** the splitting of the light into reference and measuring light takes place by partial reflection of the illuminating light in a preselected plane in the optical path of the illuminating light directed onto the sample.

6. Method according to claim 5, **characterized in that** the preselected plane is part of the substrate, particularly its surface.

7. Method according to one of the preceding claims, **characterized in that** the light is not visible IR light.

8. Method according to claim 7, **characterized in that** the frequency spectrum of the illuminating light is such that a substrate opaque for visible light is at least semitransparent for the illuminating light.

9. Device for performing the method according to claim 1 having a broad-band, short coherence length light source, an optical arrangement for illuminating the substrate, means for splitting the illuminating light into reference and measuring light, an analysis unit comprising a detection unit for light and means for returning the measuring and reference light from the substrate into the analysis unit, a computer-assisted evaluating unit for processing measurement data from the analysis unit resulting from interference of the reference and measuring light and a transcription unit which interprets the result of the evaluating unit as a bar code extending into the substrate depth and prepares it for digital processing.

10. Device according to claim 9, **characterized in that** the detection unit comprises juxtaposed, light-sensitive elements, which produce electric signals proportional to the incident light intensity.

## Revendications

1. Procédé de lecture d'un code barres s'étendant dans la profondeur d'un support, par interférence optique, le code barres étant représenté par une zone munie de marquages dans le support semi-transparent au rayonnement électromagnétique, par éclairage du support avec de la lumière à longueur de cohérence courte, issue d'une source lumineuse à large bande, partage de la lumière en lumière de référence et lumière de mesure, renvoi de la lumière de référence et de la lumière de mesure rétrodiffusée ou réfléchie par la zone de marquage dans une unité d'analyse, détermination du pouvoir rétrodiffusant ou de la réflectivité du support pour toutes les profondeurs de couches dans la zone de marquage à partir de l'interférence des lumières de référence et de mesure et interprétation du résultat en tant que code barres.

2. Procédé selon la revendication 1, **caractérisé par le fait que** la superposition des lumières de référence et de mesure génère dans l'unité d'analyse un motif d'interférence spatial dont la répartition d'intensité lumineuse est mesurée par une unité de détection disposée dans l'unité d'analyse, et qu'une unité d'évaluation détermine à partir de cela le pouvoir diffusant du support en fonction de la profondeur.

3. Procédé selon la revendication 1, **caractérisé par le fait qu'**après superposition des lumières de référence et de mesure on génère avec un spectromètre disposé dans l'unité d'analyse une répartition d'intensité décomposée en un spectre spatial que l'on mesure avec une unité de détection située dans l'unité d'analyse, et qu'une unité d'évaluation détermine à partir de cela le pouvoir diffusant du support en fonction de la profondeur.

4. Procédé selon l'une des revendications précédentes, **caractérisé par le fait que** le partage de la lumière en lumière de référence et lumière de mesure est réalisé par un séparateur de faisceau qui dirige la lumière de référence sur un miroir.

5. Procédé selon l'une des revendications 1 à 3, **caractérisé par le fait que** le partage de la lumière en lumière de référence et lumière de mesure est réalisé par réflexion partielle de la lumière d'éclairage dans un plan préalablement choisi dans le trajet des rayons de la lumière d'éclairage dirigée sur l'échantillon.

6. Procédé selon la revendication 5, **caractérisé par le fait que** le plan préalablement choisi est un élément du support, en particulier sa surface.

7. Procédé selon l'une des revendications précédentes, **caractérisé par le fait que** la lumière est de la lumière IR non visible.

8. Procédé selon la revendication 7, **caractérisé par le fait que** le spectre de fréquences de la lumière d'éclairage est choisi de telle manière qu'un support opaque à la lumière visible est au moins semi-transparent à la lumière d'éclairage.

9. Dispositif pour réaliser le procédé selon la revendication 1, avec une source lumineuse à large bande et à courte longueur de cohérence, un dispositif optique pour éclairer le support, des moyens pour partager la lumière d'éclairage en lumière de référence et lumière de mesure, une unité d'analyse comprenant une unité de détection pour la lumière ainsi que des moyens pour renvoyer les lumières de référence et de mesure du support dans l'unité d'analyse, une unité d'évaluation assistée par ordinateur pour traiter les données de mesure issues de l'unité d'analyse et résultant de l'interférence des lumières de référence et de mesure et une unité de transcription qui interprète le résultat de l'unité d'évaluation en tant que code barres qui s'étend dans la profondeur du support et le met en forme pour le traitement numérique ultérieur.

10. Dispositif selon la revendication 9, **caractérisé par le fait que** l'unité de détection se compose d'éléments photosensibles juxtaposés qui génèrent des signaux électriques proportionnels à l'intensité lumineuse incidente.
